# NEUE EUROPÄISCHE PATENTSCHRIFT

(11) **EP 2 331 345 B2**
(45) Veröffentlichungstag und Bekanntmachung des Hinweises auf die Entscheidung über den Einspruch: **21.02.2018**
(45) Hinweis auf die Patenterteilung: 25.02.2015
(21) Anmeldenummer: 09748227.7
(22) Anmeldetag: 30.09.2009
(51) Int. Cl.: G01N 21/64, G01N 21/66, G01N 21/70, G01N 21/76, G07D 7/12, B42D 15/00, B42D 25/00, B42D 25/382, B42D 25/387

(54) **SICHERHEITSMERKMAL AUF BASIS LUMINESZENZ EMITTIERENDER STOFFE**
SECURITY FEATURE ON THE BASIS OF LUMINESCENT SUBSTANCES
SIGNE DE SÉCURITÉ À BASE DE SUBSTANCES LUMINESCENTES

(30) Priorität: 09.10.2008 DE 102008050768
(43) Veröffentlichungstag der Anmeldung: 15.06.2011
(73) Patentinhaber: Bundesdruckerei GmbH, 10969 Berlin (DE)
(72) Erfinder: KUNATH, Christian, 12203 Berlin (DE); SPRINGMANN, Edward, 10249 Berlin (DE)
(74) Vertreter: Bressel, Burkhard
(86) Internationale Anmeldenummer: PCT/EP2009/007272
(87) Internationale Veröffentlichungsnummer: WO 2010/040543

(56) Entgegenhaltungen:
- EP-A1- 1 158 459
- EP-A1- 1 801 759
- EP-A2- 1 215 698
- WO-A-2005/035261
- WO-A-2005/035271
- WO-A1-02/070279
- CH-A- 498 468
- DE-A1- 2 320 731
- DE-A1- 3 048 734
- GB-A- 2 258 659
- US-A- 3 412 245
- US-A- 4 018 635
- US-A1- 2007 154 687
- US-B1- 6 380 547
- PARK J-H. ET AL: 'Synthesis and properties of luminescent Y2O3: Tb3+ (5, 8, 12 wt.%) nanocrystals' MATERIAL SCIENCE AND ENGINEERING Bd. C 27, 2007, Seiten 998 - 1000
- TREADAWAY M.J. ET AL: 'Luminescence of calcium tungstate crystals' THE JOURNAL OF CHEMICAL PHYSICS Bd. 61, Nr. 10, 15 November 1974, Seiten 4003 - 4011

## Beschreibung

### Gebiet der Erfindung

Gegenstand der Erfindung ist ein Sicherheitsmerkmal auf Basis Lumineszenz emittierender Stoffe, ein Wert- oder Sicherheitsdokument mit einem solchen Sicherheitsmerkmal und ein Verfahren zur Verifikation eines solchen Sicherheitsmerkmals.

### Stand der Technik

Bei der Untersuchung von Wert- oder Sicherheitsdokumenten auf deren Echtheit werden drei Ebenen unterschieden. In der ersten Ebene erfolgt eine einfache Prüfung ohne technische Hilfsmittel, die von jeder Person durchgeführt werden kann. Typische Sicherheitsmerkmale, welche in dieser Ebene untersucht werden können, sind zum Beispiel Wasserzeichen, Kippeffektfarben und taktile Druckstrukturen des Stichtiefdrucks. In der zweiten Ebene erfolgt eine Prüfung mit einfachen technischen Hilfsmitteln. Zu diesen zählen zum Beispiel UV-Lampen zur Beobachtung von Fluoreszenzen, Lesegeräte für Magnetstreifen oder integrierte Schaltkreise und Vergrößerungsgläser für Mikroschriften. Sicherheitsmerkmale, welche in erster oder zweiter Ebene verifiziert werden können, sind offensichtlich und im Allgemeinen dem Nutzerkreis bekannt. In der dritten Ebene erfolgt eine Prüfung der Sicherheitsmerkmale mit komplexen Untersuchungen. Dieses umfasst alle Untersuchungsmethoden, inklusive Methoden, zu deren Durchführung das Wert- oder Sicherheitsdokument zerstört werden muss. Sicherheitsmerkmale, welche für die Untersuchung der dritten Ebene bestimmt sind, sind im Allgemeinen nur einem sehr eingeschränkten Personenkreis bekannt und sollen deshalb nicht offensichtlich sein.

Lumineszierende Stoffe werden für den Wert- und Sicherheitsdruck sehr oft eingesetzt. Nicht nur Banknoten und Reisepässe, welche über eine Vielzahl von Sicherheitsmerkmalen verfügen, weisen lumineszierende Stoffe auf, sondern auch einfache Wertdokumente, wie zum Beispiel Fahrscheine des öffentlichen Personennahverkehrs. Vorteil eines Sicherheitsmerkmals auf Basis lumineszierender Stoffe ist zum einen die einfache visuelle Verifikation mittels einer UV-Lampe und zum anderen, dass ein solches Sicherheitsmerkmal mit einfachen Mitteln der Reproduktion, zum Beispiel mit einem Kopierer oder Scanner und Drucker, nicht nachstellbar ist. Oftmals werden die lumineszierenden Stoffe nicht nur als Sicherheitsmerkmal eingesetzt, sondern dienen auch zur ästhetischen Gestaltung des Dokuments.

Um ein Sicherheitsmerkmal auf Basis lumineszierender Stoffe außer für eine einfache Sichtprüfung der zweiten Ebene einzusetzen, welche nur einen sehr eingeschränkten Schutz gegen Fälschung und Verfälschung bietet, wurden Methoden entwickelt, mit denen einem Sicherheitsmerkmal der zweiten Ebene eine Verifikation der dritten Ebene hinzugefügt wird. Bei den in einfachen Dokumenten nur zur Sichtprüfung eingesetzten lumineszierenden Stoffen handelt es sich in der Regel um stark lumineszierende organische Verbindungen, welche oftmals sehr breitbandig emittieren und daher nur eine unspezifische spektrale Charakteristik aufweisen, sodass diese von einem Fälscher leicht durch ähnliche Verbindungen ersetzt werden können. Dies würde auch bei einer gründlichen Untersuchung des gefälschten Dokuments nicht auffallen.

Aus der Patentschrift CH 498 468 A ist ein Verfahren zum Aufzeichnen von Information bekannt, bei welchem mehrere verschlüsselte Symbole geschrieben werden, wobei jedes Symbol durch eine einzelne Fläche dargestellt ist, die mit mindestens einem lumineszierenden Stoff überzogen ist, wobei mindestens ein Teil der Symbole mehr als einen lumineszierenden Stoff enthält, wobei ferner das Vorhandensein oder Fehlen der lumineszierenden Stoffe in einem gegebenen Symbol wenigstens einen Teil eines mit dem Symbol verknüpften Codes darstellt und jeder lumineszierende Stoff bei Bestrahlung mit kurzwelliger Strahlung in mindestens einem Wellenlängenband luminesziert, wobei das Wellenlängenband eines Stoffes vom Wellenlängenband jedes anderen Stoffes verschieden ist. Es wird angegeben, dass hierzu beispielsweise eine einzige fluoreszierende Verbindung mit einem breiten Band als aktive Komponente mit lumineszierenden Verbindungen, beispielsweise Seltenerd-Verbindungen, mit jeweils schmalem Band verwendet wird, vorausgesetzt, dass die Breitbandfluoreszenz der aktiven Komponente auf die kurzwelligere Seite der primären Lumineszenzbänder der anderen Komponenten mit schmalem Band fällt. Falls diese Bedingung allerdings nicht erfüllt ist, muss sichergestellt werden, dass die Spiegelbild-Absorption, d.h. das zum Fluoreszenzspektrum spiegelbildliche Absorptionsspektrum, nicht stört.

Aus der Patentschrift CH 516 196 A ist ferner ein Verfahren zur Wiedererlangung einer Information bekannt, wobei von in Symbolen enthaltenen lumineszierenden Stoffen ausgehende Strahlung spektral analysiert, das Vorhandensein lumineszierender Stoffe in den Symbolen bestimmt und dadurch die in den Symbolen verschlüsselte Information ermittelt wird. Auch in diesem Falle kann beispielsweise eine einzige fluoreszierende Verbindung mit einem breiten Band als aktive Komponente mit lumineszierenden Verbindungen, beispielsweise Seltenerd-Verbindungen, mit jeweils schmalem Band verwendet werden, vorausgesetzt, dass die Breitbandfluoreszenz der aktiven Komponente auf die kurzwelligere Seite der primären Lumineszenzbänder der anderen Komponenten mit schmalem Band fällt. Falls diese Bedingung allerdings nicht erfüllt ist, muss sichergestellt werden, dass die Spiegelbild-Absorption, d.h. das zum Fluoreszenzspektrum spiegelbildliche Absorptionsspektrum, nicht stört.

Aus der WO 2007/003531 A1 sind Leuchtstoffe aus dotierten Seltenerdoxysulfiden, welche Stokes- und Anti-Stokes-Lumineszenz aufweisen, und deren Verwendung in Sicherheitsmerkmalen bekannt. Aufgrund der speziellen Emissionsspektren der Seltenerdelemente sind diese Stoffe für die Absicherung von Wert- oder Sicherheitsdokumenten besonders geeignet. Die gezeigten Spektren werden unter Verwendung hoch auflösender Sensoren und durch Messung der Intensitätsverhältnisse der Emissions-Maxima ausgewertet. Außerdem kann auch das zeitliche Verhalten, d.h. die An-und Abklingkonstanten der Emission sowie das Verhältnis dieser Konstanten, bestimmt und mit zu erwartenden Werten verglichen werden.

Aus DE 30 48 734 A1 ist ein Sicherheitspapier mit die Echtheitsmerkmale schützenden Tarnstoffen bekannt. Dieses Sicherheitspapier geht unter anderem von einem einen breitbandig emittierenden Luminophor als Tarnstoff und einem eine charakteristische Emissionslinie aufweisenden Markierungsstoff aus, bei dem die charakteristische Emissionslinie als kleine aufgesetzte Spitze auf dem Emissionsspektrum des Tarnstoffes bemerkt werden kann. Dieses System bietet jedoch keinen Schutz gegen eine Identifizierung der chemischen Zusammensetzung und der Struktur des Markierungsstoffes. Zur Lösung dieses Problems wird in einer Ausführungsform ein Tarnsystem aus lumineszierenden Markierungsstoffen in Form eines lumineszierenden Stoffes und eines dieselbe chemische Formel aufweisenden amorphen Stoffes angegeben, die beide eine Emissionslinie mit starker roter Fluoreszenz aufweisen und sich nur in der Halbwertszeit der Fluoreszenz unterscheiden.

### Problem nach dem Stand der Technik und Aufgabe der Erfindung

Da durch einfache visuelle Beobachtung die Existenz von lumineszierenden Stoffen festgestellt werden kann, wird einem potentiellen Fälscher der Hinweis gegeben, dass an dieser Stelle eine Verifikation des Wert- oder Sicherheitsdokument auch auf der dritten Ebene erfolgen kann, beziehungsweise, dass mit diesen Stoffen eine Information eingebracht worden ist. Dadurch ist es für einen potentiellen Fälscher einfach, ein Dokument zu analysieren, alle Merkmale zu identifizieren und nachzustellen und somit ein gefälschtes Dokument herzustellen beziehungsweise ein echtes Dokument zu verfälschen, das Prüfungen aller drei Ebenen standhält.

Es stellt sich somit die Aufgabe, ein Sicherheitsmerkmal und ein Wert- oder Sicherheitsdokument mit einem Sicherheitsmerkmal zu schaffen, in welchem eine Information zur Absicherung der Echtheit und/oder Unverfälschtheit des Wert- oder Sicherheitsdokuments auf Basis Lumineszenz emittierender Stoffe eingebracht ist. Die Anwesenheit der Lumineszenz emittierenden Stoffe soll durch eine dominierende Lumineszenz derart versteckt sein, dass die Anwesenheit des Sicherheitsmerkmals nicht offensichtlich ist. Anderseits soll es möglich sein, die Information leicht maschinell auszulesen und das Sicherheitsmerkmal zu verifizieren. Ferner stellt sich die Aufgabe, ein Verfahren bereit zu stellen, welche die Information, die durch das Sicherheitsmerkmal eingebracht wurde, auswerten kann.

### Beschreibung der Erfindung und bevorzugte Ausführungsformen

Die Aufgabe wird durch die in den beigefügten Ansprüchen definierten Sicherheitsmerkmale, Wert- oder Sicherheitsdokumente und Verfahren zur Verifikation solcher Sicherheitsmerkmale erfüllt.

Erfindungsgemäß wird die Aufgabe gelöst, indem ein Sicherheitsmerkmal auf Basis Lumineszenz emittierender Stoffe geschaffen wird. Die Lumineszenz des Sicherheitsmerkmals umfasst eine erste und eine zweite Lumineszenz, welche durch jeweils wenigstens einen Lumineszenz emittierenden Stoff emittiert werden. Die erste und die zweite Lumineszenz weisen jeweils wenigstens eine Bande auf, wobei sich die wenigstens eine Bande der ersten mit der wenigstens einen Bande der zweiten Lumineszenz spektral überlagert. Die erste Lumineszenz ist spektral breitbandig, wohingegen die zweite Lumineszenz spektral schmalbandig ist, das heißt, dass die spektrale Halbwertsbreite der Banden der zweiten Lumineszenz wenigstens um den Faktor 10 kleiner ist als die Halbwertsbreite der Banden der ersten Lumineszenz. Die zweite Lumineszenz weist eine spektrale Charakteristik auf, welche durch die Lagen der Maxima, der spektralen Breiten (Halbwertsbreiten) und Intensitäten von deren Banden gegeben ist. Die spektrale Charakteristik der zweiten Lumineszenz ist durch Art und Zusammensetzung des wenigstens einen die zweite Lumineszenz emittierenden Stoffes gegeben. Art und Zusammensetzung umfassen hierbei chemische Zusammensetzung, Kristallstruktur sowie Mischungsverhältnisse in Stoffgemischen und Zubereitungen. Der Art und/oder Zusammensetzung des wenigstens einen die zweite Lumineszenz emittierenden Stoffes wird wenigstens eine Information zugeordnet. Beispielsweise kann diese Zuordnung durch Eintragung in eine zentrale Datenbank erfolgen. Weiter ist die Lumineszenzlebensdauer der ersten Lumineszenz wenigstens um den Faktor 2 kleiner als die der zweiten Lumineszenz. Um erfindungsgemäß die zweite Lumineszenz und somit die dieser zugeordnete Information gegenüber einem potentiellen Fälscher zu verbergen, wird der visuelle Farbeindruck des Sicherheitsmerkmals bei Anregung zur Lumineszenz nur durch die erste Lumineszenz bestimmt, welche außerdem die Gesamtintensität der Lumineszenz dominiert. Die zweite Lumineszenz weist dem entsprechend nur eine gegenüber der Intensität der ersten Lumineszenz derart geringe Intensität der Lumineszenz auf, dass durch die zweite Lumineszenz keine Veränderung des visuellen Farbeindruckes der ersten Lumineszenz auftritt, insbesondere da die erste und die zweite Lumineszenz spektral überlagert sind, also einen ähnlichen Farbeindruck aufweisen.

Ein Stoff, welcher die zweite Lumineszenz emittiert oder einen Anteil in einem Gemisch lumineszierender Stoffe zur zweiten Lumineszenz beiträgt, kann mehr als eine Bande aufweisen. Hierbei stehen die verschiedenen Banden in festem Verhältnis bezüglich Photonenenergie und Intensität, welche durch die Eigenschaften des Stoffes gegeben sind. Typische schmalbandige Emitter, wie zum Beispiel Seltenerd-dotierte Materialien, weisen eine sehr große Zahl an Banden auf. Zur Auswertung wird die Bande bevorzugt, welche die höchste Intensität aufweist.

In einer bevorzugten Ausführungsform der Erfindung wird die zweite Lumineszenz von wenigstens zwei, bevorzugt wenigstens drei Lumineszenz emittierenden Stoffen erzeugt.

In einer bevorzugten Ausführungsform der Erfindung beträgt die Halbwertbreite der zweiten Lumineszenz weniger als 100 meV, bevorzugt weniger als 50 meV, besonders bevorzugt weniger als 25 meV.

In einer bevorzugten Ausführungsform der Erfindung werden Seltenerd-Verbindungen beziehungsweise Seltenerd-dotierte Wirtsgittersysteme als Lumineszenz emittierende Stoffe zur Erzeugung der zweiten Lumineszenz eingesetzt. Beispiele sind (SE_{2-x-y}SE'ₓSE"_{y})Ch₂Ch', Alk(SE₁₋ᵤ₋ᵥSE'ᵤSE"ᵥ)Hal₄, (SE₁₋ᵤ₋ᵥ"SE'ᵤSE"ᵥ)Hal₃, (SE₁₋ᵤ₋ᵥSE'ᵤSE"ᵥ)BO₃, (SE₁₋ᵤ₋ᵥSE'ᵤSE"ᵥ)PO₄ und (SE₁₋ᵤ₋ᵥSE'ᵤSE"ᵥ)VO₄ wobei u,v,x,y ≥0, u+v < 1, x+y < 2 sowie Ch und Ch' ausgewählt sind aus der Gruppe umfassend O, S, Se und Te, wobei Ch und Ch' auch identisch sein können, Alk ausgewählt ist aus der Gruppe umfassend Li, Na und K, Hal ausgewählt ist aus der Gruppe umfassend F, Cl, Br und I, sowie SE, SE' und SE" ausgewählt sind aus der Gruppe umfassend La, Ce, Pr, Nd, Pm, Sm, Eu, Gd, Tb, Dy, Ho, Er, Tm, Yb, Lu, und Y. Weitere Beispiele für Wirtsgitter sind Apatite, Spodiosite, Palmierite, Forsterite, Brushite, Dahllite, Ellestadite, Francolite, Monetite, Morinite, Whitlockite, Wilkeite, Voelckerite, Pyromorphite, Granate, Perovskite, Silicate, Titanate, Vanadate und Phosphate.

In einer bevorzugten Ausführungsform der Erfindung beträgt die Halbwertsbreite der ersten Lumineszenz wenigstens 200 meV, bevorzugt wenigstens 400 meV.

In einer bevorzugten Ausführungsform der Erfindung ist der Lumineszenz emittierende Stoff, welcher die erste Lumineszenz erzeugt, Zinksulfid.

In einer bevorzugten Ausführungsform der Erfindung handelt es sich bei der Lumineszenz um Photolumineszenz, insbesondere um Fluoreszenz und/oder Phosphoreszenz. Bei der Photolumineszenz erfolgt die Anregung mittels Licht im infraroten, sichtbaren oder ultravioletten Spektralbereich. Die emittierte Strahlung kann im infraroten, sichtbaren und/oder ultravioletten Spektralbereich liegen. Ist die emittierte Strahlung niederenergetischer als die Anregung, so spricht man von Stokes-Verschiebung. Ist die emittierte Strahlung höherenergetisch als die Anregung, so spricht man von Anti-Stokes-Verschiebung.

In einer weiteren bevorzugten Ausführungsform der Erfindung handelt es sich bei der Lumineszenz um Elektrolumineszenz. Die Anregung erfolgt in diesem Falle mittels eines elektrischen Feldes oder einer Spannung. Die emittierte Strahlung entsteht bei der Rekombination von Elektronen und Löchern, welche durch das angelegte Feld beziehungsweise die angelegte Spannung im Stoff erzeugt werden. Anwendungsbeispiele für Elektrolumineszenz, welche durch Anlegen eines elektrischen Feldes angeregt werden, sind Hintergrundbeleuchtungen für LCDs auf Basis von Elektrolumineszenz oder elektrolumineszente KFZ-Kennzeichen. Anwendungsbeispiel für Elektrolumineszenz, welche auf Basis einer angelegten Spannung angeregt wird, sind lichtemittierende Dioden (LEDs), insbesondere auch organische Leuchtdioden (OLEDs).

In einer weiteren bevorzugten Ausführungsform der Erfindung handelt es sich bei der Lumineszenz um Kathodolumineszenz. Die Anregung erfolgt mittels eines Elektronenstrahls, welcher auf den Stoff gerichtet wird.

In einer weiteren bevorzugten Ausführungsform der Erfindung handelt es sich bei der Lumineszenz um Tribolumineszenz. Die Anregung erfolgt mittels Reibung.

In einer weiteren bevorzugten Ausführungsform der Erfindung handelt es sich bei der Lumineszenz um Chemolumineszenz. Die Anregung erfolgt mittels einer chemischen Reaktion, welche insbesondere durch Zugabe eines chemischen Stoffes zum Sicherheitsmerkmal initiiert wird.

In einer weiteren bevorzugten Ausführungsform der Erfindung handelt es sich bei der Lumineszenz um Sonolumineszenz. Die Anregung erfolgt mittels Schall, besonders bevorzugt mittels Ultraschall.

In einer bevorzugten Ausführungsform der Erfindung ist das Sicherheitsmerkmal auf Basis Lumineszenz emittierender Stoffe Teil eines Wert- oder Sicherheitsdokumentes. Hierbei kann das Sicherheitsmerkmal drucktechnisch in das Wert- oder Sicherheitsdokument eingebracht oder auf dieses aufgebracht sein. Hierzu können alle dem Fachmann bekannten Druckverfahren des Tief-, Flach-, Hoch-, Durch- und Digitaldruckes verwendet werden. Das Wert- oder Sicherheitsdokument kann Papier-basierend, Kunststoff-basierend oder ein Mehrschichtaufbau aus unterschiedlichen Stoffen sein. Ein Mehrschichtaufbau ist ein mittels Lamination oder Kleben hergestellter Körper, zum Beispiel ein Kartenkörper. Dieser wird durch Zusammentragen einzelner Schichten, z.B. Folien und Lamination und/oder Kleben zu einem Körper verbunden. Hierbei können die Folien aus gleichen oder verschiedenen Materialien bestehen, insbesondere aus Polycarbonat (PC), insbesondere Bisphenol-A-Polycarbonat, Polyethylenterephthalat (PET), deren Derivaten wie Glykol-modifiziertem PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastischen Elastomeren (TPE), insbesondere thermoplastischem Polyurethan (TPU), Acrylnitril-Butadien-Styrol (ABS), Papier, Teslin® (PPG Industries, US) sowie deren Derivaten, koextrudierten Folien, welche unter anderen diese Materialien enthalten, sowie Hybridmaterialien, welche unter anderen die oben genannten Materialien enthalten. In einem Mehrschichtaufbau kann das Sicherheitsmerkmal auf eine oder mehrere Schichten aufgebracht sein.

In einer bevorzugten Ausführungsform der Erfindung ist das Sicherheitsmerkmal auf Basis Lumineszenz emittierender Stoffe integraler Bestandteil des Wert- oder Sicherheitsdokuments. Beispielsweise sind die Lumineszenz emittierenden Stoffe in ein Material des Wert- oder Sicherheitsdokument eingebracht, zum Beispiel in ein Papier oder eine Kunststofffolie. Die Einbringung erfolgt hierbei bei der Herstellung des Papiers oder der Kunststofffolie, indem die Lumineszenz emittierenden Stoffe einem Papierbrei beziehungsweise einem Basispolymer zugesetzt werden.

Ein Wert- oder Sicherheitsdokument mit wenigstens einem erfindungsgemäßen Sicherheitsmerkmal kann weitere, dem Fachmann bekannte Sicherheitsmerkmale aufweisen.

In einer bevorzugten Ausführungsform der Erfindung ist die zugeordnete Information zusätzlich zum erfindungsgemäßen Sicherheitsmerkmal an wenigstens einer zweiten Stelle im Dokument enthalten. Hierdurch wird eine Absicherung der Information erreicht und eine einfache Verifikation der zugeordneten Information ermöglicht.

In einer bevorzugten Ausführungsform der Erfindung ist die zugeordnete Information das ausgebende Land, der Dokumententyp, die Dokumentenlaufzeit, das Ausstellungsjahr, die Dokumentennummer, eine Zahl, eine Prüfziffer, ein Hash-Wert, der Anfangsbuchstaben des Inhabernamens oder dergleichen.

In einer bevorzugten Ausführungsform der Erfindung handelt es sich bei dem Wert-oder Sicherheitsdokument um einen Reisepass, einen Personalausweis, eine Geburtsurkunde, ein Visum, einen Führerschein, eine Kreditkarte, eine Bankkarte, einen Firmenausweis, einen Mitgliedausweis, einen Fahrzeugschein, eine Banknote, einen Scheck, eine Aktie, eine Briefmarke, ein Steuerzeichen oder dergleichen.

Das erfindungsgemäße Verifikationsverfahren eines erfindungsgemäßen Sicherheitsmerkmals umfasst fünf Schritte:
Im ersten Schritt a) erfolgt die Anregung der lumineszierenden Stoffe zur Lumineszenz. Hierzu wird zum Beispiel ein zur Phosphoreszenz anregbare Stoffe enthaltendes Sicherheitsmerkmal mit UV-Licht bestrahlt.
Im zweiten Schritt b) wird die Intensität der vom Sicherheitsmerkmal emittierten Lumineszenzstrahlung wellenlängenabhängig zu wenigstens einem bekannten Zeitpunkt vorzugsweise nach der Anregung detektiert. Anstelle eines Zeitpunktes kann erfindungsgemäß auch ein Zeitraum für die Detektion gewählt werden, was auch die technisch bevorzugte Ausführungsform darstellt.
Im dritten Schritt c) erfolgt die Identifikation der ersten und der zweiten Lumineszenz aus der zeit- und wellenlängenabhängigen Lumineszenzintensität.
Im vierten Schritt d) werden Art und/oder Zusammensetzung des wenigstens einen die zweite Lumineszenz emittierenden Stoffes zu der wenigstens einen Bande der zweiten Lumineszenz zugeordnet. Hierzu kann die gemessene spektrale Charakteristik der zweiten Lumineszenz mit bekannten Lumineszenzspektren von schmalbandig Lumineszenz emittierenden Stoffen verglichen werden.
Im fünften Schritt e) wird die der Art und/oder Zusammensetzung des wenigstens einen die zweite Lumineszenz emittierenden Stoffes zugeordnete Information ermittelt. Hierzu kann zum Beispiel in einer bei der Herstellung des Wert- oder Sicherheitsdokumentes angelegten zentralen Datenbank die Information abgefragt werden, welche der Art und/oder Zusammensetzung des wenigstens einen die zweite Lumineszenz emittierenden Stoffes zugeordnet worden ist.

Aufgrund des direkten mathematischen Zusammenhangs werden hier und im Folgenden Wellenlänge, Frequenz und Photonenenergie gleichrangig verwendet. Die Wellenlänge λ und die Photonenenergie E sind über die Beziehung E(eV) = 1240 eV · nm /λ(nm) ineinander umrechenbar.

In einer bevorzugten Ausführungsform des Verifikationsverfahrens erfolgt die Identifizierung der ersten und der zweiten Lumineszenz aus der zeit- und wellenlängenabhängigen Lumineszenzintensität durch eine Vorgabe möglicher vorhandener Stoffe, welche zur Emission der ersten oder zweiten Lumineszenz eingesetzt worden sein können. Alle Stoffe, welche eingesetzt worden sein können, bilden eine Gruppe von Lumineszenz emittierenden Stoffen. Deren jeweilige zeit- und wellenlängenabhängige Intensitätsverteilung ist bekannt. Aus der Kenntnis der möglichen zeit- und wellenlängenabhängige Intensitätsverteilungen erfolgt das Identifizieren von ersten spektralen Bereichen, in welchen nur die erste Lumineszenz vorhanden ist, und das Identifizieren von zweiten spektralen Bereichen, in welchen die erste Lumineszenz vorhanden ist als auch eine zweite Lumineszenz vorhanden sein kann. Aus der Intensität der Lumineszenz in den ersten spektralen Bereichen, in welchen nur die erste Lumineszenz vorhanden ist, und dem bekannten spektralen Verlauf der ersten Lumineszenz kann die Intensität der ersten Lumineszenz auch in den zweiten spektralen Bereichen ermittelt werden, in welchen sowohl erste als auch zweite Lumineszenz auftritt. Weiter erfolgt die Zuordnung von Art und/oder Zusammensetzung des wenigstens einen die zweite Lumineszenz emittierenden Stoffes durch die Auswahl der vorhandenen Stoffe aus der Gruppe der vorgegebenen möglichen Stoffe.

Beispielsweise werden für Banknoten einer Währung zwei verschiedene breitbandig erste Lumineszenz emittierende Stoffe sowie fünf verschiedene schmalbandig zweite Lumineszenz emittierende Stoffe eingesetzt. Die im Verifikationsverfahren detektierte Lumineszenz wird mit der jeweiligen Lumineszenz der möglichen eingesetzten Stoffe verglichen und die tatsächlich vorhandenen die zweite Lumineszenz emittierenden Stoffe hierdurch identifiziert. Der in einer Banknote jeweils vorliegenden Kombination der die zweite Lumineszenz emittierenden Stoffe ist eine Information zugeordnet, zum Beispiel der Wert der Banknote oder ein Hash-Wert der Seriennummer.

In einer bevorzugten Ausführungsform des Verifikationsverfahrens wird im Schritt d) bei n verschiedenen zweiten Photonenenergien von dem möglichen Auftreten von Banden der zweiten Lumineszenz ausgegangen, sofern nur eine bekannte Gruppe von Lumineszenz emittierenden Stoffen zur Herstellung des Sicherheitsmerkmals eingesetzt worden sein kann (n ist eine ganze Zahl und gibt die Anzahl der Banden von möglichen die zweite Lumineszenz emittierenden Stoffen in dem Sicherheitsmerkmal an). Aus der jeweiligen bekannten spektralen Charakteristik der möglichen eingesetzten Stoffe sind die Photonenenergien, an welchen Banden auftreten können, bekannt. Bei diesen zweiten Photonenenergien wird im Schritt da) die Intensität I_{2,n} ermittelt, welche der Gesamtintensität der ersten und der zweiten Lumineszenz bei den zweiten Photonenenergien entspricht. Dieses erfolgt bevorzugt durch die Extraktion der Daten aus der im Schritt b) gemessenen Verteilung der zeit- und wellenlängenabhängigen Lumineszenzintensität. Hierdurch wird eine nennenswerte Reduktion der Daten und somit eine schnellere Verarbeitung und Auswertung erzielt. Weiter werden im Schritt db) bei m ersten Photonenenergien die Intensität der Lumineszenz I_{1,m} ermittelt, wobei bei diesen m ersten Photonenenergien keine Banden der zweiten Lumineszenz auftreten (m ist eine ganze Zahl und gibt die Anzahl von Messpunkten im Lumineszenzspektrum an, an denen keine zweite Lumineszenz emittiert wird). Unter dem Nicht-Auftreten der zweiten Lumineszenz wird erfindungsgemäß verstanden, dass die Intensität der zweiten Lumineszenz zum Zeitpunkt der Lumineszenzmessung und im betrachteten spektralen Bereich unter 5%, bevorzugt unter 1% der Maximalintensität abgefallen ist. Im Schritt dc) wird das Verhältnis V_{n,m} = I_{2,n} /I_{1,m} gebildet. Hierbei kann I_{1,m} aus einer für alle zweiten Photonenenergien gleichen Intensität der ersten Lumineszenz bestehen. Bevorzugt wird für jede der n zweiten Photonenenergien bei einer spektral benachbarten ersten Photonenenergie die Lumineszenzintensität ermittelt oder aus mehreren spektral benachbarten ersten Photonenenergien ein Wert für die Lumineszenzintensität der n-ten zweiten Photonenenergie extrapoliert. Aus dem Über- und/oder Unterschreiten eines oder mehrerer Grenzwerte der Verhältnisse V_{n,m} wird das Vorhandensein oder Fehlen einer Bande im Schritt dd) bei der zweiten Photonenenergie ermittelt und aus den vorhandenen Banden die die zweite Lumineszenz emittierenden Stoffe zugeordnet.

In einer bevorzugten Ausführungsform der Verifikation erfolgt der Schritt b), die vom Sicherheitsmerkmal emittierte Lumineszenzstrahlungsintensität wellenlängenabhängig zu detektieren, zu wenigstens zwei Zeitpunkten oder in wenigstens zwei Zeitintervallen nach der Anregung, bevorzugt zu wenigstens drei Zeitpunkten oder in wenigstens drei Zeitintervallen nach der Anregung. Einem Zeitintervall kann zur Vereinfachung der Auswertung erfindungsgemäß ein Zeitpunkt zugewiesen werden, welcher innerhalb des Zeitintervalls liegt und dem die gemessene Lumineszenzintensität zugeordnet wird. Zum Beispiel wird im Zeitintervall 50 µs bis 150 µs nach der Anregung eine erste wellenlängenabhängige Intensitätsverteilung ermittelt und dem Zeitpunkt 100 µs zugewiesen, und eine zweite wellenlängenabhängige Intensitätsverteilung wird im Zeitintervall 400 µs bis 600 µs nach der Anregung ermittelt und dem Zeitpunkt 500 µs zugewiesen.

Eine Vorrichtung zur Verifikation eines erfindungsgemäßen Sicherheitsmerkmals auf Basis Lumineszenz emittierender Stoffe mit einer ersten und einer zweiten Lumineszenz weist Mittel zur zeitlich begrenzten Anregung der Lumineszenz emittierenden Stoffe zur Lumineszenz sowie Mittel zur zeitlich begrenzten, wellenlängenabhängigen, von der Anregung zeitlich verzögerten Detektion der Lumineszenz auf. Da sich die erste und die zweite Lumineszenz erfindungsgemäß in der Lumineszenzlebensdauer unterscheiden, ist es zur Trennung der ersten und der zweiten Lumineszenz aus der Gesamtlumineszenz des Sicherheitsmerkmals notwendig, das Sicherheitsmerkmal zunächst für einen Zeitraum zur Lumineszenz anzuregen. Nach Beendigung der Anregung klingt die Lumineszenz entsprechend der jeweiligen Lumineszenzlebensdauer ab. Zu wenigstens einem Zeitpunkt nach Beendigung der Anregung wird die vom Sicherheitsmerkmal emittierte Lumineszenz wellenlängenabhängig detektiert. Hierzu verfügt die Vorrichtung zur Verifikation bevorzugt über energiedispersive Mittel, welche zwischen dem Sicherheitsmerkmal und den Mitteln zur Detektion der Lumineszenz angeordnet sind.

In einer bevorzugten Ausführungsform der Vorrichtung zur Verifikation eines erfindungsgemäßen Sicherheitsmerkmals weist die Vorrichtung gepulst betriebene Mittel zur Anregung der Lumineszenz, Mittel zur spektralen Auftrennung des Lumineszenzlichtes und Mittel zur Detektion der Lumineszenz, welche mit einer höheren Rate ausgelesen werden können als die Anregung erfolgt, auf. Diese Ausführungsform ist bevorzugt, wenn ein Sicherheitsmerkmal zum Beispiel auf eine Vorrichtung zur Verifikation aufgelegt wird, wie dieses zum Beispiel bei Dokumentenprüfgeräten üblich ist. Diese Prüfgeräte sind im Regelfall derart ausgebildet, dass mehr als ein Sicherheitsmerkmal verifiziert werden kann.

In einer bevorzugten Ausführungsform der Vorrichtung zur Verifikation eines erfindungsgemäßen Sicherheitsmerkmals sind die Mittel zur Anregung der Lumineszenz zur Emission von elektromagnetischer Strahlung im ultravioletten, sichtbaren oder infraroten Bereich ausgebildet.

In einer bevorzugten Ausführungsform der Vorrichtung zur Verifikation eines erfindungsgemäßen Sicherheitsmerkmals sind die Mittel zur Anregung der Lumineszenz als LED, Laser oder Laser-Diode, Blitzlampe oder Lampe-Shutter-System ausgebildet.

In einer alternativen bevorzugten Ausführungsform der Vorrichtung zur Verifikation eines erfindungsgemäßen Sicherheitsmerkmals weist die Vorrichtung Mittel zur Anregung der Lumineszenz, Mittel zur spektralen Auftrennung der zu detektierenden Lumineszenz, wenigstens ein Mittel zur Detektion der Lumineszenz und Mittel zum Transport des Sicherheitsmerkmals auf. In dieser Ausführungsform sind die Mittel zur Anregung der Lumineszenz und das wenigstens eine Mittel zur Detektion der Lumineszenz räumlich voneinander getrennt und die Mittel zum Transport des Sicherheitsmerkmals transportieren das Sicherheitsmerkmal vom Ort der Anregung zu wenigstens einem Ort der Detektion der Lumineszenz. Beispielsweise handelt es sich bei den Mitteln zum Transport um ein Förderband, beispielsweise zum Transport von Banknoten oder Briefen entlang einer Transportstrecke. An einem Ort dieser Transportstrecke befinden sich Mittel zur Anregung der Lumineszenz. Diese Mittel können kontinuierlich oder diskontinuierlich betrieben werden. Als Beispiel für kontinuierlich betriebene Mittel zur Anregung seien Halogenbogenlampen oder Quecksilberdampflampen genannt, welche eine sehr hohe Strahlendosis zur Anregung zur Verfügung stellen können und somit zu einer sehr starken Lumineszenz anregen. Als Beispiel für diskontinuierlich betriebene Mittel seien LEDs genannt, welche nur eingeschaltet werden, wenn ein Sicherheitsmerkmal zur Überprüfung angeregt werden soll. Dieses hat bei Vorrichtungen mit geringerem Durchsatz den Vorteil der längeren Lebensdauer der Mittel zur Anregung. In einem ersten räumlichen Abstand zu den Mitteln zur Anregung befinden sich wenigstens ein erstes Mittel zur spektralen Auftrennung und Mittel zur Detektion der Lumineszenz. Bevorzugt befinden sich in wenigstens einem zweiten räumlichen Abstand zu den Mitteln zur Anregung zweite Mittel zur spektralen Auftrennung und Mittel zur Detektion der Lumineszenz. Die Mittel zu Detektion der Lumineszenz erfassen die Lumineszenzstrahlungsintensität wellenlängenabhängig. Die Zeitabhängigkeit der Lumineszenzstrahlungsintensität ergibt sich bei konstanter Transportgeschwindigkeit v aus dem Abstand zwischen dem Ort der Anregung und den jeweiligen Orten der Detektion der Lumineszenz über die Beziehung t = s / v, wobei t die Zeit nach der Anregung und s der Abstand zwischen dem Ort der Anregung und dem Ort der Detektion der Lumineszenz sind. Die Zeitabhängigkeit der Lumineszenzstrahlungsintensität ergibt sich bei konstanter Beschleunigung a aus dem Abstand zwischen dem Ort der Anregung und den jeweiligen Orten der Detektion der Lumineszenz über die Beziehung t = (2 s/a)^{½}. Insbesondere kann es sich bei der konstanten Beschleunigung um die Erdbeschleunigung g handeln, wenn es sich bei der Bewegung um einen freien Fall handelt.

Ausführungsbeispiele der Erfindung werden nun unter Bezugnahme auf die beigefügten Figuren beschrieben. Die einzelnen Figuren zeigen:
- Fig. 1:: Lumineszenzintensitätsverteilung eines ersten (Fig. 1 a) und eines zweiten (Fig. 1 b) erfindungsgemäßen Sicherheitsmerkmals zu zwei verschiedenen Zeitpunkten nach Anregung der Lumineszenz;
- Fig. 2:: Lumineszenzintensitätsverteilung eines ersten (Fig. 2 a) und eines zweiten (Fig. 2 b) erfindungsgemäßen Sicherheitsmerkmals mit Vorgabe möglicher vorhandener zweiter Fluoreszenzen;
- Fig. 3:: Wert- oder Sicherheitsdokument mit einem erfindungsgemäßen Sicherheitsmerkmal;
- Fig. 4:: Vorrichtung zur Verifikation eines Wert- oder Sicherheitsdokumentes mit einem erfindungsgemäßen Sicherheitsmerkmal in einer ersten Ausführungsform;
- Fig. 5:: Verfahrensschrittes eines erfindungsgemäßen Verfahrens zur Verifikation eines Wert-oder Sicherheitsdokumentes mit einem erfindungsgemäßen Sicherheitsmerkmal in einer ersten Ausführungsform;
- Fig. 6:: Verfahrensschritte eines weiteren erfindungsgemäßen Verfahrens zur Verifikation eines Wert- oder Sicherheitsdokumentes mit einem erfindungsgemäßen Sicherheitsmerkmal in einer zweiten Ausführungsform;
- Fig. 7:: Vorrichtung zur Verifikation eines bewegten Wert- oder Sicherheitsdokumentes mit einem erfindungsgemäßen Sicherheitsmerkmal in einer zweiten Ausführungsform.

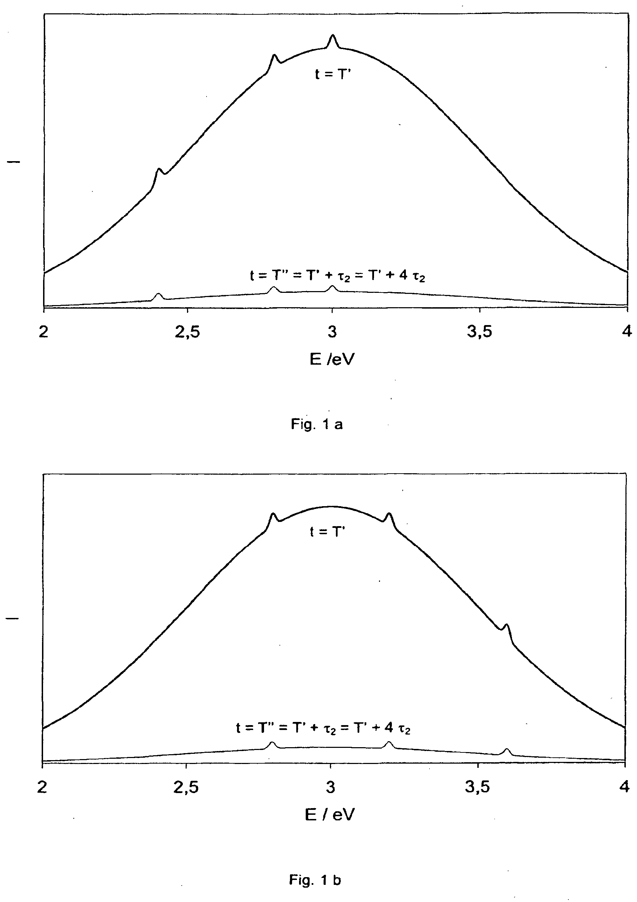

In Fig. 1 a sind Lumineszenzspektren eines ersten erfindungsgemäßen Sicherheitsmerkmals zu zwei verschiedenen Zeitpunkten T' und T" nach der Anregung dargestellt. Auf der Abszisse ist die Energie E in eV und auf der Ordinate die Intensität I dargestellt. Die erste Lumineszenz weist ein Maximum bei 3,0 eV, die zweite Lumineszenz weist Banden bei 2,4, 2,8 und 3,0 eV auf, welche von drei schmalbandig Lumineszenz emittierenden Stoffen erzeugt wird. Im dargestellten Fall sind die Verhältnisse der Lumineszenzintensitäten der breitbandigen Lumineszenz zu den schmalbandigen mit 1000:1:1:1 und die Lumineszenzlebensdauerverhältnisse τ₁:τ₂:τ₂:τ₂ = 1:4:4:4 gegeben. Die Halbwertsbreite der breitbandigen Lumineszenz liegt bei etwa 1,2 eV, die der schmalbandigen bei etwa 0,024 eV. Das obere Lumineszenzspektrum entspricht der Lumineszenzverteilung zu einem Zeitpunkt T' = 0, also direkt nach Beendigung der Anregung.

Das untere Lumineszenzspektrum entspricht der Lumineszenzverteilung zu einem Zeitpunkt T" = T' + τ₂ = T' + 4 τ₁, welcher um die Lumineszenzlebensdauer τ₂ der schmalbandigen Lumineszenz, beziehungsweise die vierfache Lumineszenzlebensdauer τ₁ der breitbandigen Lumineszenz nach dem ersten Zeitpunkt T' liegt. Die Lumineszenzlebensdauer entspricht dem Zeitpunkt, an den die Intensität auf 1/e abgesunken ist.

In Fig. 1b sind analog zu Fig. 1 a Lumineszenzspektren eines zweiten erfindungsgemäßen Sicherheitsmerkmals zu zwei verschiedenen Zeitpunkten T' und T" nach der Anregung dargestellt. Hierbei wurde im Unterschied zu der in Fig. 1 a gezeigten eine andere Mischung an schmalbandig Lumineszenz emittierenden Stoffen gewählt, so dass die zweite Lumineszenz Banden bei 2,8, 3,2 und 3,6 eV aufweist. Somit ist eine andere Information zugeordnet.

Es ist gut erkennbar, dass die Banden der zweiten Lumineszenz aus den Spektren der ersten und der zweiten Lumineszenz aufgrund deren längerer Lumineszenzlebensdauer extrahiert werden können. Die schmalbandige Lumineszenz kann durch die sehr geringe Anfangsfluoreszenz visuell nicht wahrgenommen werden, der Farbeindruck wird durch die breitbandige erste Lumineszenz dominiert. Weiterhin sind die Banden der zweiten Lumineszenz auch nur mit Geräten mit entsprechend hoher Empfindlichkeit und Auflösung nachweisbar, was eine Erkennung durch einen potentiellen Fälscher weiter erschwert. Somit ist eine vollständige Nachstellung aufgrund der offensichtlichen breitbandigen ersten Lumineszenz weniger wahrscheinlich und die Information, welche dem Sicherheitsmerkmal zugeordnet ist, besonders gesichert.

Bei den Darstellungen handelt es sich um schematische Darstellungen. In den Figuren weisen die die schmalbandige zweite Lumineszenz emittierenden Stoffe jeweils genau eine Emissionsbande auf. Die meisten schmalbandigen Emitter, zum Beispiel Seltenerd-Luminophore, weisen jedoch eine Reihe von Banden auf, welche untereinander jedoch in einem festen Intensitätsverhältnis stehen, weshalb sich an der grundsätzlichen Ausführungsform nichts ändert.

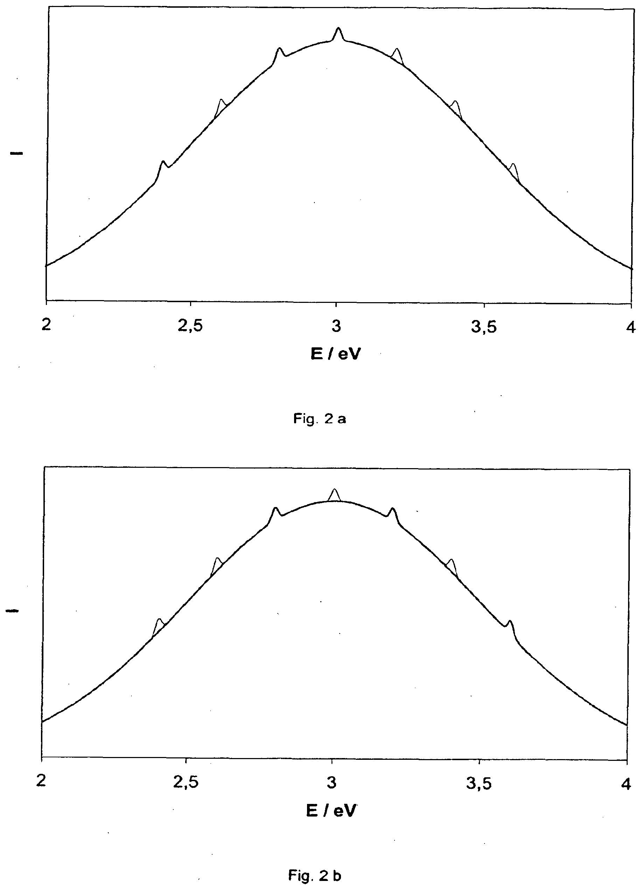

In Fig. 2 ist ein Sicherheitsmerkmalssystem dargestellt, bei welchem aus sieben verschiedenen Stoffen, welche schmalbandig Lumineszenz emittieren, jeweils eine Kombination von drei der sieben Stoffe zur Herstellung eines Sicherheitsmerkmals eingesetzt wurden. Die dicke durchgezogene Linie zeigt schematisch die gemessene spektrale Verteilung, während die mit schwacher Linie mögliche weitere Banden weiterer Stoffe darstellen, die jedoch nicht gemessen werden, weil sie nicht vorhanden sind. Beispielsweise ist die Information durch die Anwesenheit der drei schmalbandig Lumineszenz emittierenden Stoffe kodiert. In Fig. 2 a ist ein erstes und in Fig. 2b ein zweites Beispiel dargestellt. Beispielsweise kann die Information einem Binärcode zugeordnet sein, welcher aus dem Vorhandensein (1) oder Nichtvorhandensein (0) der verschiedenen die zweite Lumineszenz emittierenden Stoffe gebildet wird. Um dieses zu verdeutlichen, ist den gezeigten Lumineszenzspektren ein Lumineszenzspektrum mit allen sieben möglichen Banden der Gruppe möglicher Stoffe hinterlegt. Die Maxima der Banden der möglichen Stoffe, welche die zweite Lumineszenz emittieren, liegen bei 2,4, 2,6, 2,8, 3,0, 3,2, 3,4 und 3,6 eV. Dieser Kodierung entsprechend wäre der in Fig. 2 a gezeigten Lumineszenz die Information [1011000] mit Banden der zweiten Lumineszenz bei 2,4, 2,8 und 3,0 eV und der in Fig. 2b gezeigten Lumineszenz die Information [0010101] mit Banden der zweiten Lumineszenz bei 2,8, 3,2 und 3,6 eV zugeordnet. Ein so ausgestaltetes Sicherheitsmerkmal kann zum Beispiel dazu genutzt werden, um Berechtigungsklassen zu kodieren, zum Beispiel verschiedene Klassen von Fahrberechtigungen eines Führerscheininhabers. In diesem Beispiel würde die in Fig. 2 a gezeigte Lumineszenzintensitätsverteilung auf einem Dokument mit einer Berechtigung zum Führen der Fahrzeugklassen 1, 3 und 4 zu finden sein, die in Fig. 2b gezeigte hingegen auf einem Dokument mit einer Berechtigung zum Führen der Fahrzeugklassen 3, 5 und 7.

Der Vorteil dieser Ausführungsform liegt darin, dass ein Verifikationsgerät nur auf die Frequenzen der möglichen Banden der zweiten Lumineszenz, zum Beispiel bei 2,4, 2,6, 2,8, 3,0, 3,2, 3,4 und 3,6 eV, sowie auf Frequenzen mit ausschließlich erster Lumineszenz, zum Beispiel bei 2,3, 2,5, 2,7, 2,9, 3,1, 3,3, 3,5 und 3,7 eV, zur Erfassung der Messdaten ausgebildet sein muss, beziehungsweise nur die Daten an diesen Messpunkten weiterverarbeiten muss. Dadurch ist das Auswerteverfahren deutlich vereinfacht, sodass das Auswerteverfahren ohne großen rechnerischen Aufwand und somit auch leicht auf kleinen Geräten, insbesondere mobilen Verifikationsgeräten, durchgeführt werden kann.

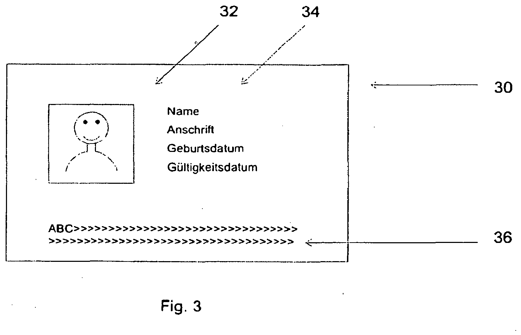

In Fig. 3 ist ein Dokument 30 gezeigt, zum Beispiel ein Personalausweis. Auf diesem ist ein Passbild 32, welches mit dem erfindungsgemäßen Sicherheitsmerkmal abgesichert ist. Hierzu können zum Beispiel einer der zum Druck des Passbildes verwendeten Farben Lumineszenz emittierende Stoffe in erfindungsgemäßer Weise zugesetzt sein. Weiter sind auf dem Dokument 30 Inhaberdaten 34 untergebracht sowie eine maschinenlesbare Zone 36, wo weitere Daten aufgebracht sind. In dem Sicherheitsmerkmal ist zum Beispiel die Gültigkeit kodiert, welche sich im Bereich der Inhaberdaten 34 und/oder der maschinenlesbaren Zone 36 wieder findet. Alternativ oder zusätzlich kann diese Information auch in einem in das Dokument 30 eingebetteten integrierten Schaltkreis gespeichert sein. Hierdurch wird der Austausch und/oder die Manipulation des Passbildes erschwert, da bei einem Austausch oder Manipulation die zugeordnete Information entfernt und die Veränderung somit offensichtlich gemacht wird.

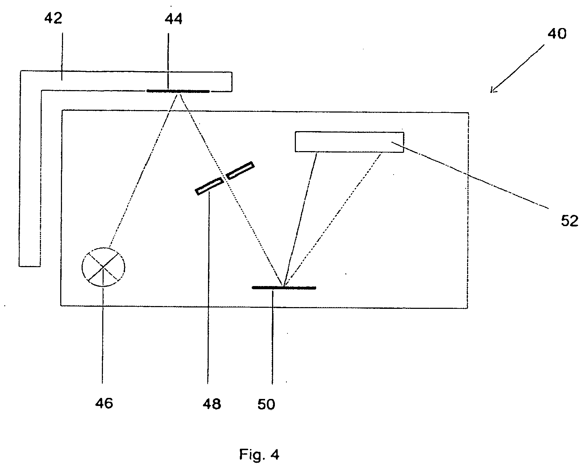

In Fig. 4 ist eine Vorrichtung 40 zur Verifikation eines Dokumentes 42 mit einem erfindungsgemäßen Sicherheitsmerkmal 44 dargestellt. Die Vorrichtung 40 weist Mittel zur Anregung 46 auf. Hierbei kann es sich zum Beispiel um eine gepulst betriebene UV-LED handeln. Durch das UV-Licht werden die Lumineszenz emittierenden Stoffe des Sicherheitsmerkmals 44 zur Lumineszenz angeregt. Das emittierte Licht wird durch eine Optik 48, zum Beispiel einen Spalt, auf ein dispersives Element 50, zum Beispiel ein Gitter, geleitet. Das aufgespaltene Licht wird mit einen Detektor 52, zum Beispiel mit einer CCD-Zeile, detektiert. Beispielsweise können die Mittel zur Anregung das Sicherheitsmerkmal für einen Zeitraum von 100 µs zur Lumineszenz anregen und mit einer Wiederholrate von 1 kHz betrieben werden. Somit ergibt sich in diesem Falle ein Zeitfenster von 900 µs für die Detektion der Lumineszenz, weshalb eine Ausleserate der Detektion der Lumineszenz von zum Beispiel 10 kHz sinnvoll ist. Die Daten können von einer Datenverarbeitungseinrichtung ausgelesen und ausgewertet werden.

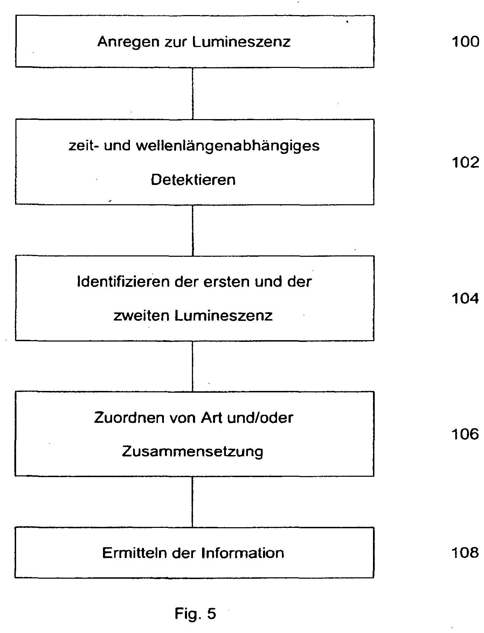

In Fig. 5 sind die Verfahrensschritte eines erfindungsgemäßen Verfahrens dargestellt, wie es zum Beispiel mit einer in Fig. 4 gezeigten Vorrichtung durchgeführt werden kann. Zunächst werden im Schritt 100 die Lumineszenz emittierenden Stoffe des Sicherheitsmerkmals 44 mit Mitteln zur Anregung 46 zur Lumineszenz angeregt. Das emittierte Licht wird mit zeitlicher Verzögerung gegenüber der Anregung im Schritt 102 mittels Optik 48, dispersivem Element 50 und Detektor 52 erfasst. Die gemessene zeit- und wellenlängenabhängige Lumineszenzintensitätsverteilung wird an eine Datenverarbeitungseinrichtung weitergegeben. Hier erfolgt in einem ersten Schritt der Auswertung 104 das Identifizieren der ersten und der zweiten Lumineszenz. Zum Beispiel erfolgt zunächst eine Anpassung der ersten Lumineszenz, zum Beispiel durch Anpassung einer Gauss-, Lorentz- oder Pseudo-Voigt-Verteilung. Anschließend kann die zweite Lumineszenzintensitätsverteilung durch Subtraktion der angenommenen ersten Lumineszenzintensitätsverteilung vom gemessenen Lumineszenzspektrum erhalten werden. Alternativ kann eine Anpassung mit einer Mehrzahl an Gauss-, Lorentz- oder Pseudo-Voigt-Verteilungen zur Anpassung der ersten und zweiten Lumineszenz erfolgen, wobei die zur ersten beziehungsweise zweiten Lumineszenz gehörenden Banden anhand der Halbwertsbreite identifiziert werden können. Im Schritt 106 erfolgt die Zuordnung von Art und/oder Zusammensetzung der die zweite Lumineszenz emittierenden Stoffe. Diese werden anhand ihrer spektralen Charakteristik ermittelt und der zweiten Lumineszenz zugeordnet. Nach der Zuordnung kann in Schritt 106 aus Art und/oder Zusammensetzung der die zweite Lumineszenz emittierenden Stoffe, also der chemischen Zusammensetzung, die zugeordnete Information ermittelt werden.

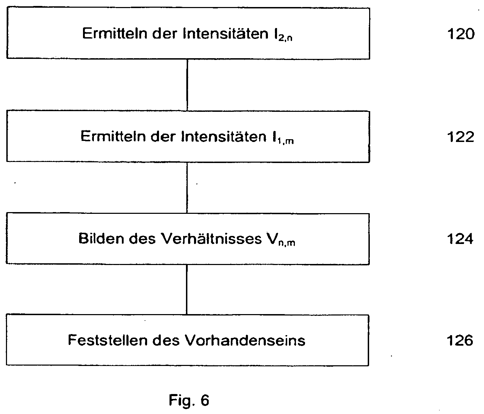

Eine weitere Ausführungsform eines Verfahrens zur Verifikation ist in Fig. 6 dargestellt. Es wird beispielhaft von einem System ausgegangen, bei welchem für die Herstellung eines erfindungsgemäßen Sicherheitsmerkmals und somit für die Zuordnung der Information ein Stoff für die Erzeugung der ersten Lumineszenz und sieben Stoffe für die Erzeugung der zweiten Lumineszenz eingesetzt werden. Dieses System ist in Fig. 2 gezeigt. Die Lumineszenz des die erste breitbandige Lumineszenz emittierenden Stoffes weist eine Bande mit einem Maximum bei 3,0 eV auf. Die Lumineszenzbanden der sieben Stoffe, welche zur Erzeugung der zweiten Lumineszenz eingesetzt werden können, liegen bei 2,4, 2,6, 2,8, 3,0, 3,2, 3,4 und 3,6 eV. Aus der Kenntnis der jeweiligen spektralen Charakteristik der möglichen verwendeten Stoffe vereinfacht sich die Auswertung, welche das Identifizieren der ersten und zweiten Lumineszenz sowie das Zuordnen von Art und/oder Zusammensetzung der die zweite Lumineszenz emittierenden Stoffe zu den ermittelten Banden umfasst. Zunächst erfolgen Anregung und Detektion analog den Schritten 100 und 102. Zur Auswertung wird nun nicht das gesamte Lumineszenzspektrum betrachtet, sondern in einem ersten Schritt 120 die Intensitäten I_{2,n} bei den zweiten Photonenenergien ermittelt, bei welchen Banden der zweiten Lumineszenz auftreten können. In diesem Fall werden I_{2,1} bei 2,4 eV, I_{2,2} bei 2,6 eV, I_{2,3} bei 2,8 eV, I_{2,4} bei 3,0 eV, I_{2,5} bei 3,2 eV, I_{2,6} bei 3,4 eV und I_{2,7} bei 3,8 eV ermittelt. Im nächsten Schritt 122 werden die Intensitäten I_{1,m} der ersten Lumineszenz ermittelt. Zum Beispiel werden I_{1,1} bei 2,3 eV, I_{1,2} bei 2,5 eV, ... I_{1,7} bei 3,5 eV und I_{1,8} bei 3,7 eV ermittelt, da an diesen Stellen kein nennenswerter Beitrag der zweiten Lumineszenz zur Lumineszenzintensität zu erwarten ist. Im dritten Schritt 124 wird nun für jede mögliche Komponente der zweiten Lumineszenz das Intensitätsverhältnis V_{n,m} bestimmt. Hierzu wird zum Beispiel das Verhältnis V_{n,m} = I_{2,n} /I_{1,m} mit n = m gebildet. Um im Schritt 124 festzustellen, ob ein Stoff, welcher zur Erzeugung der zweiten Lumineszenz eingesetzt worden sein kann, vorhanden ist, wird verglichen, ob das Verhältnis V_{n,m} = I_{2,n} /I_{1,m} einen unteren Grenzwert unterschreitet oder einen oberen Grenzwert überschreitet. Ist der untere Grenzwert unterschritten, kann mit Sicherheit davon ausgegangen werden, dass der mögliche die zweite Lumineszenz emittierende Stoff nicht vorhanden ist. Wird der obere Grenzwert überschritten, so kann mit Sicherheit davon ausgegangen werden, dass der mögliche die zweite Lumineszenz emittierende Stoff vorhanden ist. Diese Auswertung kann zu verschiedenen Zeitpunkten nach der Anregung wiederholt werden. Die Grenzwerte können für jeden einzelnen möglichen die zweite Lumineszenz emittierenden Stoff und jeden möglichen Zeitpunkt oder jedes mögliche Zeitintervall nach der Anregung unterschiedlich sein. Ein möglicher die zweite Lumineszenz emittierender Stoff kann als anwesend betrachtet werden, sofern der untere Grenzwert zu keinem Zeitpunkt unterschritten und der obere Grenzwert zu wenigstens einem Zeitpunkt überschritten worden ist. Ein möglicher die zweite Lumineszenz emittierender Stoff kann als abwesend betrachtet werden, sofern der obere Grenzwert zu keinem Zeitpunkt überschritten und der untere Grenzwert zu wenigstens einem Zeitpunkt unterschritten worden ist.

In einer weiteren Ausführungsform des Schrittes 124 wird vor Bilden des Verhältnisses I_{2,n} / I_{1,m} zunächst durch Extrapolation eine Intensität I_{1,n} der ersten Lumineszenz am Ort der möglichen zweiten Lumineszenz ermittelt. Dieses erfolgt im oben genannten Beispiel durch Mittelung von Intensitäten I_{1,m}, die zu der Intensität I_{2,n} benachbart sind. Zum Beispiel wird zur Bildung des Verhältnisses V₃ = I_{2,3}/I_{1,m} bei 2,8 eV zunächst aus den Werten I_{1,3} bei 2,7 eV und I_{1,4} bei 2,9 eV ein Wert I'_{1,3} = (I_{1,3} + I_{1,4})/2 gebildet. Auf diese Weise können die Grenzwerte, in diesem Beispiel mit Ausnahme für den vierten möglichen Stoff mit einer Lumineszenz bei 3,0 eV, gleichgesetzt werden, da bei nicht vorhandener zweiter Lumineszenz das Verhältnis nahe 1 liegt.

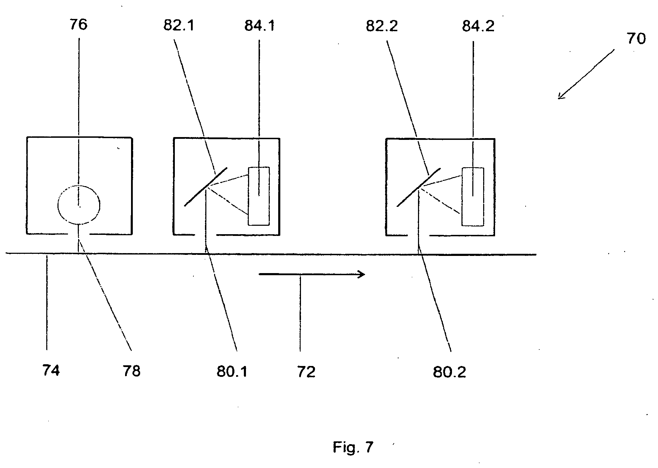

In Fig. 7 ist eine Ausführungsform einer möglichen Vorrichtung 70 zur Verifikation von bewegten Sicherheitsmerkmalen gezeigt. Beispielsweise kann eine derartige Vorrichtung in eine Prüf- oder Sortiervorrichtung integriert sein, zum Beispiel für Banknoten oder Briefe. In solchen Vorrichtungen wird ein Gut, zum Beispiel eine Banknote oder ein Brief, mit hoher Geschwindigkeit entlang der Transportrichtung 72 mittels eines Transportmittels 74 transportiert. An einem ersten Punkt werden die die erste und zweite Lumineszenz emittierenden Stoffe, welche Teil des Sicherheitsmerkmals sind, mit Mitteln 76 zu Anregung zur Lumineszenz angeregt. Zum Beispiel kann es sich um eine UV-Lampe, zum Beispiel eine Quecksilberdampflampe oder eine Halogenbogenlampe, handeln, welche mittels UV-Strahlung 78 die Lumineszenz anregt. Die Anregung zur Lumineszenz kann in dieser Ausführungsform kontinuierlich erfolgen, da ein erfindungsgemäßes Sicherheitsmerkmal aufgrund des Transportes entlang der Transportrichtung 72 nur eine bestimmte Zeit zur Lumineszenz angeregt wird. Das Sicherheitsmerkmal emittiert kontinuierlich Lumineszenz, welche entsprechend der Lumineszenzlebensdauer abklingt. An wenigstens einem anderen Ort entlang der Transportstrecke befinden sich Mittel zur Detektion der Lumineszenz, die so angebracht sind, dass sie die von einem vorbei transportierten Sicherheitsmerkmal emittierte Lumineszenz 80.1, 80.2 empfangen. Diese wird über ein dispersives Element 82.1,82.2 auf einen Detektor 84.1, 84.2, zum Beispiel eine CCD- oder CMOS-Zeile, geleitet. Beispielsweise befinden sich über einem Transportband, welches mit 10 m/s bewegt wird, an einer Position x = 0 Mittel zur Anregung, zum Beispiel eine Quecksilberdampflampe oder eine Halogenbogenlampe. In einem Abstand von 1 mm befinden sich erste Mittel zur spektralen Auftrennung und Mittel zur Detektion der Lumineszenz, welche die wellenlängenabhängige Lumineszenzstrahlungsintensität zum Zeitpunkt 100 µs nach der Anregung erfassen. An einer weiteren Position im Abstand von 10 mm befinden sich zweite Mittel zur spektralen Auftrennung und Mittel zur Detektion der Lumineszenz, welche die wellenlängenabhängige Lumineszenzstrahlungsintensität zum Zeitpunkt 1 ms nach der Anregung erfassen. Die ermittelte zugeordnete Information kann zum Beispiel der Transportvorrichtung übergeben werden, um zum Beispiel mit dem Sicherheitsmerkmal wertkodierte Banknoten entsprechend dem Wert zu sortieren. Alternativ oder zusätzlich kann der so ermittelte Wert mit einem optisch ausgelesenen Wert verglichen werden. Im Falle der Wertkodierung bei Briefmarken kann zum Beispiel ein Vergleich mit dem benötigten Wert, welcher sich zum Beispiel aus einer Wägung des Briefes ergibt, verglichen werden. Ist das Porto nicht ausreichend, kann der Brief von der Transportvorrichtung in einen Bereich mit unzureichend frankierter Post aussortiert werden.

## Patentansprüche

1. Sicherheitsmerkmal auf Basis Lumineszenz emittierender Stoffe, wobei die Lumineszenz eine erste und eine zweite Lumineszenz umfasst,
wobei die erste Lumineszenz spektral breitbandig und die zweite Lumineszenz spektral schmalbandig ist,
**dadurch gekennzeichnet, dass** sowohl die erste als auch die zweite Lumineszenz jeweils wenigstens eine Bande aufweisen und sich die wenigstens eine Bande der ersten Lumineszenz mit der wenigstens einen Bande der zweiten Lumineszenz überlagert,
wobei die zweite Lumineszenz eine spektrale Charakteristik aufweist, welche durch Art und Zusammensetzung des wenigstens einen die zweite Lumineszenz emittierenden Stoffes gegeben ist,
wobei der Art und/oder der Zusammensetzung des wenigstens einen die zweite Lumineszenz emittierenden Stoffes wenigstens eine Information zugeordnet ist,
wobei die spektrale Halbwertsbreite der wenigstens einen Bande der zweiten Lumineszenz wenigstens um den Faktor 10 kleiner ist als die spektrale Halbwertsbreite der wenigstens einen Bande der ersten Lumineszenz,
wobei ferner die Lumineszenzlebensdauer der ersten Lumineszenz wenigstens um den Faktor 2 kleiner ist als die Lumineszenzlebensdauer der zweiten Lumineszenz und wobei der visuelle Farbeindruck des Sicherheitsmerkmals bei Anregung des wenigstens einen emittierenden Stoffes zur Lumineszenz und die Gesamtintensität der Lumineszenz durch die spektral breitbandige erste Lumineszenz bestimmt werden.

2. Sicherheitsmerkmal auf Basis Lumineszenz emittierender Stoffe gemäß Anspruch 1, **dadurch gekennzeichnet, dass** die zweite Lumineszenz von wenigstens zwei lumineszierenden Stoffen erzeugt wird.

3. Sicherheitsmerkmal auf Basis Lumineszenz emittierender Stoffe gemäß Anspruch 1 oder 2, **dadurch gekennzeichnet, dass** die wenigstens eine Bande der zweiten Lumineszenz eine Halbwertsbreite von weniger als 100 meV aufweist.

4. Sicherheitsmerkmal auf Basis Lumineszenz emittierender Stoffe gemäß einem der vorstehenden Ansprüche, **dadurch gekennzeichnet, dass** die zweite Lumineszenz von Seltenerd-Verbindungen erzeugt wird.

5. Sicherheitsmerkmal auf Basis Lumineszenz emittierender Stoffe gemäß einem der vorstehenden Ansprüche, **dadurch gekennzeichnet, dass** die wenigstens eine Bande der ersten Lumineszenz eine Halbwertsbreite von wenigstens 200 meV aufweist.

6. Sicherheitsmerkmal auf Basis Lumineszenz emittierender Stoffe gemäß einem der vorstehenden Ansprüche, **dadurch gekennzeichnet, dass** die erste Lumineszenz von Zinksulfid erzeugt wird.

7. Wert- oder Sicherheitsdokument mit wenigstens einem Sicherheitsmerkmal, **dadurch gekennzeichnet, dass** wenigstens ein Sicherheitsmerkmal ein Sicherheitsmerkmal auf Basis Lumineszenz emittierender Stoffe gemäß einem der Ansprüche 1 bis 6 ist.

8. Wert- oder Sicherheitsdokument mit wenigstens einem Sicherheitsmerkmal gemäß Anspruch 7, **dadurch gekennzeichnet, dass** das Sicherheitsmerkmal auf Basis Lumineszenz emittierender Stoffe an einer ersten Stelle im Dokument enthalten ist und die im Sicherheitsmerkmal eingebrachte Information zusätzlich an einer zweiten Stelle im Dokument enthalten ist.

9. Verfahren zur Verifikation eines Sicherheitsmerkmals, **dadurch gekennzeichnet, dass** das Verfahren das Bereitstellen eines Sicherheitsmerkmals auf Basis Lumineszenz emittierender Stoffe gemäß einem der Ansprüche 1 bis 6 umfasst und dass das Verfahren folgende weitere Verfahrensschritte umfasst:
a) Anregen der emittierenden Stoffe zur Lumineszenz,
b) zeit- und wellenlängenabhängiges Detektieren der Lumineszenzintensität,
c) Identifizieren der ersten und der zweiten Lumineszenz aus der zeit- und wellenlängenabhängigen Lumineszenzintensität,
d) Zuordnen von Art und/oder Zusammensetzung des wenigstens einen die zweite Lumineszenz emittierenden Stoffes zu der wenigstens einen Bande der zweiten Lumineszenz und
e) Ermitteln der dem wenigstens einen die zweite Lumineszenz emittierenden Stoff zugeordneten Information.

10. Verfahren zur Verifikation eines Sicherheitsmerkmals gemäß Anspruch 9, **dadurch gekennzeichnet, dass** eine Gruppe von Lumineszenz emittierenden Stoffen mit bekannter zeit- und wellenlängenabhängiger Intensitätsverteilung, welche die erste und die zweite Lumineszenz emittieren können, vorgegeben ist, und die Kenntnis der zeit- und wellenlängenabhängigen Intensitätsverteilung der Stoffe dieser Gruppe zum Identifizieren der ersten und der zweiten Lumineszenz und zum Zuordnen von Art und/oder Zusammensetzung des wenigstens einen die zweite Lumineszenz emittierenden Stoffes zu der wenigstens einen Bande der zweiten Lumineszenz verwendet wird.

11. Verfahren zur Verifikation eines Sicherheitsmerkmals gemäß Anspruch 10, **dadurch gekennzeichnet, dass** der Verfahrensschritt d) umfasst:
da) Ermitteln von Intensitäten der Lumineszenz I_{2,n} bei n erwarteten Photonenenergien von Banden der zweiten Lumineszenz,
db) Ermitteln von Intensitäten der Lumineszenz I_{1,m} bei m Photonenenergien, an denen nur die erste Lumineszenz auftritt,
dc) Bilden der Verhältnisse der Intensitäten V_{n,m} = I_{2,n} / I_{1,m} und
dd) Feststellen des Vorhandenseins oder Nichtvorhandenseins von erwarteten Lumineszenz emittierenden Stoffen, welche die zweite Lumineszenz erzeugen können, aufgrund eines Über- oder Unterschreitens eines vorgegebenen Grenzwertes durch die Verhältnisse V_{n,m.}

12. Verfahren zur Verifikation eines Sicherheitsmerkmals gemäß einem der Ansprüche 9 bis 12, **dadurch gekennzeichnet, dass** die Lumineszenz zu wenigstens zwei Zeitpunkten oder in wenigstens zwei Zeitintervallen nach der Anregung der emittierenden Stoffe detektiert wird.

## Claims

1. Security feature on the basis of luminescent substances, wherein the luminescence comprises a first and a second luminescence, wherein the first luminescence is of a spectrally broadband type and the second luminescence is of a spectrally narrow-band type, **characterised in that** both the first and also the second luminescence have in each case at least one band and the at least one band of the first luminescence is overlaid with the at least one band of the second luminescence, wherein the second luminescence has spectral characteristics which are provided by the type and composition of the at least one substance emitting the second luminescence, wherein the type and / or the composition of the at least one substance emitting the second luminescence is allocated at least one piece of information, wherein the spectral full width at half maximum of the at least one band of the second luminescence is smaller by a factor of at least 10 than the spectral full width at half maximum of the at least one band of the first luminescence, wherein furthermore the luminescence life of the first luminescence is smaller by a factor of at least 2 than the luminescence life of the second luminescence and whereby the visual colour impression of the security feature upon excitation of the at least one emitting substance to luminescence and the total intensity of the luminescence are determined by the spectrally broadband first luminescence.

2. Security feature on the basis of luminescent substances according to claim 1, **characterised in that** the second luminescence is generated by at least two luminescent substances.

3. Security feature on the basis of luminescent substances according to claim 1 or 2, **characterised in that** the at least one band of the second luminescence has a full width at half maximum of less than 100 meV.

4. Security feature on the basis of luminescent substances according to any one of the preceding claims, **characterised in that** the second luminescence is generated by rare earth compounds.

5. Security feature on the basis of luminescent substances according to any one of the preceding claims, **characterised in that** the at least one band of the first luminescence has a full width at half maximum of less than 200 meV.

6. Security feature on the basis of luminescent substances according to any one of the preceding claims, **characterised in that** the first luminescence is generated by zinc sulphide.

7. Value or security document with at least one security feature, **characterised in that** at least one security feature is a security feature on the basis of luminescent substances according to any one of claims 1 to 6.

8. Value or security document with at least one security feature according to claim 7, **characterised in that** the security feature on the basis of luminescent substances is contained at a first place in the document, and the information introduced in the security feature is additionally contained at a second place in the document.

9. Method for verifying a security feature, **characterised in that** the method comprises providing a security feature on the basis of luminescent substances according to any one of claims 1 to 6 and that the method comprises the following further steps:
a) excitation of the emitting substances to luminescence,
b) time-dependent and wavelength-dependent detection of the luminescence intensity,
c) identification of the first and the second luminescence from the time-dependent and wavelength-dependent luminescence intensity,
d) allocation of the type and / or composition of the at least one substance emitting the second luminescence to the at least one band of the second luminescence and
e) detection of the information allocated to the at least one substance emitting the second luminescence.

10. Method for verifying a security feature according to claim 9, **characterised in that** a group of luminescent substances is specified with a known time-dependent and wavelength-dependent intensity distribution which the first and the second luminescence can emit, and the knowledge of the time-dependent and wavelength-dependent intensity distribution of the substances of this group is used to identify the first and the second luminescence and to allocate the type and / or composition of the at least one substance emitting the second luminescence to the at least one band of the second luminescence.

11. Method for verifying a security feature in accordance with claim 10, **characterised in that** the step d) comprises:
da) determination of the intensities of the luminescence I_{2,n} for n expected photon energies from the bands of the second luminescence,
db) determination of the intensities of the luminescence I_{1,m} with m photon energies at which only the first luminescence occurs,
dc) formation of the ratios of the intensities V_{n,m} = I_{2,n} / I_{1,m} and
dd) ascertaining of the presence or absence of expected luminescent substances which can generate the second luminescence, on the basis of the ratios V_{n,m} exceeding or falling below a specified threshold value.

12. Method for verifying a security feature in accordance with any one of claims 9 to 12, **characterised in that** the luminescence is detected at at least two points in time or at at least two time intervals after the excitation of the emitting substances.

## Revendications

1. Signe de sécurité à base de substances émettrices de luminescence, la luminescence comprenant une première et une seconde luminescence,
la première luminescence présentant un spectre à large bande et la seconde luminescence un spectre à bande étroite,
**caractérisé en ce que**
aussi bien la première que la seconde luminescence comprennent chacune au moins une bande et ladite au moins une bande de la première luminescence est recouverte par ladite au moins une bande de la seconde luminescence,
la seconde luminescence comprenant une caractéristique spectrale qui est donnée par le type et la composition de ladite au moins une substance émettant la seconde luminescence, le type et/ou la composition de ladite au moins une substance émettant la seconde luminescence étant associée à une information,
la largeur spectrale de valeur moyenne de ladite au moins une bande de la seconde luminescence étant plus petite d'au moins un facteur 10 que la largeur spectrale de valeur moyenne de ladite au moins une bande de la première luminescence,
en plus, la durée de vie de luminescence de la première luminescence étant plus petite d'au moins un facteur 2 que la durée de vie de luminescence de la seconde luminescence et la perception visuelle de couleur du signe de sécurité en cas d'excitation de ladite au moins une substance émettrice pour provoquer la luminescence et l'intensité totale de la luminescence étant déterminées par la première luminescence à spectre à large bande.

2. Signe de sécurité à base de substances émettrices de luminescence selon la revendication 1, **caractérisé en ce que** la seconde luminescence est générée au moins par deux substances luminescentes.

3. Signe de sécurité à base de substances émettrices de luminescence selon la revendication 1 ou 2, **caractérisé en ce que** ladite au moins une bande de la seconde luminescence présente une largeur de valeur moyenne inférieure à 100 meV.

4. Signe de sécurité à base de substances émettrices de luminescence selon l'une quelconque des revendications précédentes, **caractérisé en ce que** la seconde luminescence est générée par des combinaisons de terres rares.

5. Signe de sécurité à base de substances émettrices de luminescence selon l'une quelconque des revendications précédentes, **caractérisé en ce que** ladite au moins une bande de la première luminescence présente une largeur de valeur moyenne d'au moins 200 meV.

6. Signe de sécurité à base de substances émettrices de luminescence selon l'une quelconque des revendications précédentes, **caractérisé en ce que** la première luminescence est générée par du sulfure de zinc.

7. Document de valeur ou de sécurité ayant au moins un signe de sécurité, **caractérisé en ce que** ledit au moins un signe de sécurité est un signe de sécurité à base de substances émettrices de luminescence selon l'une quelconque des revendications 1 à 6.

8. Document de valeur ou de sécurité ayant au moins un signe de sécurité selon la revendication 7, **caractérisé en ce que** le signe de sécurité à base de substances émettrices de luminescence est contenu à une première position dans le document et l'information introduite dans le signe de sécurité est contenue en plus à une seconde position dans le document.

9. Procédé de vérification d'un signe de sécurité, **caractérisé en ce que** le procédé comprend la provision d'un signe de sécurité à base de substances émettrices de luminescence selon l'une quelconque des revendications 1 à 6 et **en ce que** le procédé comprend les autres étapes de procédé suivantes :
a) excitation des substances émettrices pour provoquer la luminescence,
b) détection de l'intensité de la luminescence dépendante du temps et de la longueur d'onde,
c) identification de la première et de la seconde luminescence à partir de l'intensité de la luminescence dépendante du temps et de la longueur d'onde,
d) association du type et/ou de la composition de ladite au moins une substance émettrice de la seconde luminescence à ladite au moins une bande de la seconde luminescence et
e) détermination de l'information associée à ladite au moins une substance émettrice de la seconde luminescence.

10. Procédé de vérification d'un signe de sécurité selon la revendication 9, **caractérisé en ce qu'**un groupe de substances émettrices de luminescence avec une distribution connue d'intensités dépendantes du temps et de la longueur d'onde, qui peuvent émettre la première et la seconde luminescence, est prédéfini, et que la connaissance de la distribution connue d'intensités dépendantes du temps et de la longueur d'onde des substances de ce groupe est employée pour l'identification de la première et de la seconde luminescence et pour l'association du type et/ou de la composition de ladite au moins une substance émettrice de la seconde luminescence à ladite au moins une bande de la seconde luminescence.

11. Procédé de vérification d'un signe de sécurité selon la revendication 10, **caractérisé en ce que** l'étape de procédé d) comprend :
da) détermination d'intensités de la luminescence I_{2,n} avec n énergies de photons attendues de bandes de la seconde luminescence,
db) détermination d'intensités de la luminescence I_{1,m} avec m énergies de photons pour lesquelles seule la première luminescence apparaît,
dc) formation d'un rapport des intensités V_{n,m} = I_{2,n} / I_{1,m} et
dd) constatation de la présence ou de l'absence des substances émettrices de luminescence attendues, qui peuvent générer la seconde luminescence, en raison d'un dépassement par le haut ou par le bas d'une valeur limite prédéfinie par les rapports V_{n,m}.

12. Procédé de vérification d'un signe de sécurité selon l'une quelconque des revendications 9 à 12, **caractérisé en ce que** la luminescence est détectée à au moins deux instants ou dans au moins deux intervalles de temps après l'excitation des substances émettrices.
